# EUROPÄISCHE PATENTSCHRIFT

(11) **EP 1 003 381 B1**
(45) Veröffentlichungstag und Bekanntmachung des Hinweises auf die Patenterteilung: **12.12.2001**
(21) Anmeldenummer: 98936062.3
(22) Anmeldetag: 10.08.1998
(51) Int. Cl.: A23D 7/00, A23D 7/015

(54) **ESSBARE WASSER-IN-ÖL-DISPERSIONEN UND VERFAHREN ZUR DEREN HERSTELLUNG**
EDIBLE WATER-IN-OIL DISPERSIONS AND METHOD FOR THEIR PRODUCTION
DISPERSIONS EAU DANS HUILE COMESTIBLES ET METHODE POUR LEUR PREPARATION

(30) Priorität: 12.08.1997 CH 190697
(43) Veröffentlichungstag der Anmeldung: 31.05.2000
(73) Patentinhaber: Coop Schweiz, 4053 Basel (CH)
(72) Erfinder: MARTIN, Werner, CH-4410 Liestal (CH)
(74) Vertreter: Zimmermann, Hans, Dr.
(86) Internationale Anmeldenummer: CH9800335
(87) Internationale Veröffentlichungsnummer: WO9908542

(56) Entgegenhaltungen:
- EP-A- 0 032 808
- US-A- 4 447 463
- DATABASE WPI Section Ch, Week 8624 Derwent Publications Ltd., London, GB; Class D11, AN 86-152418 XP002085812 & JP 61 085140 A (NIPPON OILS & FATS CO LTD), 30. April 1986
- DATABASE WPI Section Ch, Week 8430 Derwent Publications Ltd., London, GB; Class D13, AN 84-184616 XP002085813 & JP 59 102356 A (NIPPON OILS & FATS CO LTD), 13. Juni 1984
- PRAJAPATI P S ET AL: "Ingredient selection for production of a low-fat butter flavoured spread." JOURNAL OF FOOD SCIENCE AND TECHNOLOGY, INDIA, Bd. 28, Nr. 4, 1991, Seiten 204-207, XP002085811 SMC Coll. of Dairy Sci., Gujarat Agric. Univ., Anand Campus, Anand, Gujarat, India

## Beschreibung

Die vorliegende Erfindung betrifft essbare Wasser-in-Öl-Dispersionen, umfassend milchfremde Fetten und eine in der Fettphase dispergierte Wasserphase, sowie ein Verfahren zu ihrer Herstellung.

Seit dem letzten Jahrhundert ist es technisch möglich, plastifizierte Dispersionen von Wasser in Öl (im folgenden W/O-Dispersionen) herzustellen, bei denen ein Teil des Milchfetts durch milchfremde Fette ersetzt ist. Es ist auch möglich, W/O-Dispersionen herzustellen, bei denen ein gegenüber Butter höherer Wassergehalt vorhanden ist, wodurch solche Dispersionen einen geringeren Kaloriengehalt als Butter haben.

In der schweizerischen Lebensmittelverordnung werden solche W/O-Dispersionen mit einem Fettgehalt von mindestens 80 Gewichtsprozenten als "Margarinen" definiert; als "Halbfettmargarine" oder "Minarine" werden dort W/O-Dispersionen mit einem Fettanteil von zwischen 39 und 41 Gewichtsprozenten und einem Wasseranteil von mindestens 50 Gewichtsprozenten bezeichnet. Als "Pflanzenmargarine" bzw. "Pflanzenminarine" können die entsprechenden W/O-Dispersionen bezeichnet werden, wenn sie ausschliesslich aus Pflanzenfetten oder -ölen hergestellt sind.

Üblicherweise werden Margarinen und ähnliche W/O-Dispersionen hergestellt, indem eine Fettphase in verflüssigtem Zustand mit einer Wasserphase unter Zusatz von Emulgatoren (z.B. Lecithin, Fettsäure-Monoglyceride) gemischt und die gebildete intermediäre Wasser-in-Öl-Emulsion (im folgenden W/O-Emulsion) rasch gekühlt wird.

Die Eigenschaften dieser W/O-Emulsion, d.h. etwa die Grösse der Wassertröpfchen und die Mengenverhältnisse der Fette, haben einen Einfluss auf das Verhalten der fertigen Margarine oder Halbfettmargarine; so zum Beispiel, ob sie einer übermässigen Postkristallisation unterliegt oder allmählich Wasser abgibt. Durch Art und Menge des zugegebenen Emulgators lassen sich die Eigenschaften der W/O-Emulsion steuern. Insbesondere bei der Herstellung von Halbfettmargarinen gilt der Einsatz von Emulgatoren als Zusatzstoffen als nötig (vgl. Ullmann's Encyclopädie der technischen Chemie, Bd. 16, S. 487). Nach Kenntnis der Anmelderin konnte sich auf dem Markt keine Margarine ohne Emulgatoren durchsetzen.

Im Zuge der zunehmenden Skepsis gegenüber künstlichen Zusatzstoffen, insbesondere der Vorbehalte der Konsumenten gegenüber Lecithin aus gentechnisch verändertem Soja, wäre es jedoch kommerziell interessant, wenn man auf die Zugabe solcher Emulgatoren verzichten konnte. Man ist in der Technik deshalb vereinzelt auch dazu übergegangen, Buttermilch und Molke, oder wässerige Zubereitungen der entsprechenden Trockenpulver, die alle eine gute Emulgierwirkung aufweisen, als Wasserphase zu verwenden.

In der ehemaligen Tschechoslowakei wurde ein Fettprodukt "Dukat" in Form einer Mischung von Sonnenblumenöl und bakteriell gereiftem Rahm (siehe unten) im Verhältnis 73 : 27 hergestellt (vgl. Prumysl potravin 1975, 26(10), p. 488 und Výziva Lidu 1975, 30(11), p. 169).

In Beispiel 3 von EP-B-0 032 808 wurde eine W/O-Dispersion als Mischung von Palmkernfett, Butter und bakteriell gereiftem Rahm im Verhältnis von etwa 73:200:20 hergestellt. Aufgrund des hohen Butteranteils ist diese Dispersion eher als Butterersatz denn als Margarine anzusehen.

In der japanischen Patentveröffentlichung JP-A-5910236 werden (gemäss Zusammenfassungen der Datenbanken "DWPI" und "Patent Abstracts of Japan") Margarinen offenbart, die durch Mischen von vergorener Milch (wässerige Lösung von 8 bis 11 Gewichtsprozenten sterilisierter Milch-Trockensubstanz, vergoren mit 1 bis 3 Gewichtsprozenten an Milchsäurebakterien auf einen pH von 4,5 bis 5,5) mit Fetten und Ölen erhalten werden, wobei auch zusätzliche Emulgatoren verwendet werden. Der Anteil der vergorenen Milch beträgt 5 bis 60 Gewichtsteile pro 100 Gewichtsteilen Fette und Öle.

Der vorliegenden Erfindung liegt die Aufgabe zugrunde, eine W/O-Dispersion herzustellen, die auch bei grösseren Wasseranteilen ohne Zusatz künstlicher Emulgatoren auskommt und einen Gehalt an Milchfetten und milchfremden Fetten dergestalt aufweist, dass sie einer Margarine oder Halbfettmargarine nahekommt. Als "künstlich" sollen in der hiesigen Anmeldung Emulgatoren bezeichnet werden, deren Zulässigkeit in Lebensmitteln gesetzlich geregelt ist und die z.B. in Europa unter E-Nummern bekannt sind.

Die Aufgabe wird erfindungsgemäss gelöst durch eine Wasserin-Öl-Dispersion, umfassend milchfremde Fette, Rahm mit Milchfetten und eine in der Fettphase dispergierte Wasserphase, dadurch gekennzeichnet, dass
a) der Rahm in einer Menge zwischen 1 und 20 Gewichtsprozenten der Dispersion vorhanden ist,
b) die Wasserphase einschliesslich des Serums des Rahms 5 bis 65 Gewichtsprozente der Dispersion beträgt, und
c) milchfremde Fette und Milchfett in einem Gewichtsverhältnis von mindestens 4 zu 1 vorhanden sind.

Es wurde nämlich überraschenderweise festgestellt, dass Rahm die Emulgierung von Fett und Wasserphase bewirken kann, auch wenn er in wesentlich geringerer Menge als in den obigen beiden Literaturstellen offenbart und ohne Zuhilfenahme von künstlichen Emulgatoren eingesetzt wird. Vorzugsweise wird der Rahm in Mengen von etwa 3 bis etwa 15 Gewichtsprozenten, bezogen auf die W/O-Dispersion, eingesetzt. Bei Margarinen reicht im allgemeinen bereits eine Rahmmenge von 3 bis 7 Gewichtsprozenten, um eine optimale Emulgierwirkung zu erzielen. Zur Geschmacksverbesserung können jedoch vorzugsweise auch Mengen von beispielsweise bis zu etwa 12 Gewichtsprozenten vorhanden sein. Typischerweise kann daher der Gehalt an Rahm für eine Margarine z.B. etwa 10 Gewichtsprozente betragen. Bei Halbfettmargarinen liegt der hinsichtlich Emulgierung bevorzugte Bereich des Rahmgehalts bei 6 bis 15 Gewichtsprozenten.

Als "Margarinen" sollen in der vorliegenden Anmeldung W/ODispersionen mit 75 bis 95 Gewichtsprozenten Fett, bezogen auf die Dispersion, verstanden werden; als "Halbfettmargarinen" sollen W/O-Dispersionen mit 35 bis 45 Gewichtsprozenten Fett, bezogen auf die Dispersion, bezeichnet werden.

Als "Rahm" wird in Rahmen der vorliegenden Erfindung jeder aus Milch gewonnene Rahm verstanden, der einen Milchfettanteil von etwa 300 bis 500 g / kg, bevorzugt etwa 350 g / kg, und milchfettfremde Anteile von mindestens etwa 50 g / kg, bevorzugt mindestes etwa 70 g / kg und besonders bevorzugt mindestens etwa 85 g / kg aufweist. Diese milchfettfremden Anteile sind Molkenproteine und Casein in Mengen von einigen Gewichtsprozenten (typisch 2 bis 3%), Milchzukker (typisch etwa 3%) und Mineralstoffe (typisch etwa 0,3 bis 0,7%).

Beispiele für den Rahm sind Butterungsrahm, wie er üblicherweise für die Butterherstellung verwendet wird, die Rahmsorten "Rahm", "Vollrahm" oder "Schlagrahm" gemäss Artikel 67, Absätze 1 und 2 der Schweizerischer Lebensmittelverordnung vom 1. 7. 1995; "Schlagsahne" gemäss der deutschen Milcherzeugnis-Verordnung vom 15.7.1970, "reduced cream" aus England sowie "high whipping cream" und "heavy whipping cream" aus den USA.

Als erfindungsgemäss verwendbarer Rahm gelten auch Rahmsorten wie oben beschrieben, die aber zusätzlich durch Zugabe einer als Zusatzstoff in Lebensmitteln zugelassenen sauren Agens oder durch bakterielle Reifung (Säuerung) angesäuert wurden. Solche angesäuerten Rahmsorten sind erfindungsgemäss bevorzugt, und besonders bevorzugt ist ein bakteriell gereifter Butterungsrahm. Dieser bakteriell gereifte Butterungsrahm wird im Rahmen der vorliegenden Anmeldung als Sauerrahm bezeichnet.

Das Verfahren der bakteriellen Säuerung von Rahm ist in der Technik bekannt (z.B. im Zusammenhang mit der Herstellung von Sauerrahmbutter). Für die bakterielle Reifung geeignet sind säurebildende Bakterien (insbesondere Lactococcus lactis subsp. Lactis oder subsp. Cremoris) und wahlweise auch Aromabildner (insbesondere Lactococcus lactis subsp. Lactis biovar. Diacetylactis oder Leuconostoc mesenteroides subsp. Cremoris), die einzeln oder als Mischkultur in Mengen von etwa 2 bis 5 Gewichtsprozenten bezüglich dem Rahm eingesetzt werden können. Die bakteriologische Reifung wird üblicherweise bei 8 bis 21°C während etwa 12 bis 24 Stunden durchgeführt. Der erfindungsgemäss einsetzbare Sauerrahm weist im Serum vorzugsweise einen Säuregrad von etwa 25 bis 40 SH (Soxhlet-Henkel-Zahl, 1 SH entspricht 1 ml 0,25 N NaOH, die aufgewendet werden muss, um 100 ml Sauerrahm zu neutralisieren) auf.

Solcher Sauerrahm kann, da er ein Ausgangsmaterial zur Butterherstellung ist, z.B. bei Molkereien fertig bezogen werden.

Alle erfindungsgemäss verwendbaren Rahmsorten können wahlweise auch einer physikalischen Reifung (d.h. eine Lagerung bei 5 bis 10° C wahrend einigen Stunden zur Veränderung der Konsistenz des Fettanteils) unterzogen worden sein. Auch die physikalische Reifung des Rahms stellt ein in der Technik übliches Verfahren dar.

Die Wasserphase der erfindungsgemässen W/O-Dispersion umfasst das Serum des Rahms, d.h. das Wasser aus dem Rahm und die für Rahm typischen wasserlöslichen Bestandteile, wie Proteine, Casein, Mineralstoffe, Lactose, Milchsäure usw. Die Wasserphase umfasst zusätzlich zum Serum des Rahms weiteres Wasser. Das zusätzlich eingesetzte Wasser kann gewünschtenfalls teilweise oder ganz in Form von wässerigen Salzlösungen vorliegen, und es können auch Buttermilch, Molke oder andere Milchprodukte bzw. Serum aus diesen Milchprodukten vorhanden sein.

Vorzugsweise weist die Wasserphase der erfindungsgemässen Dispersion einen pH von 4,0 bis 5,0, bevorzugt 4,5 bis 5,0, besonders bevorzugt von 4,5 bis 4,8 auf. Das kann durch Anwesenheit eines sauren Agens (z.B. Citronensäure, Milchsäure, Vitamin C, Benzoesäure, Buttermilch, Buttermilchserum, usw.) bewirkt sein. Diese sauren Agentien oder andere saure Milchprodukte können bei der Herstellung der W/O-Emulsion, die das Ausgangsmaterial der erfindungsgemässen W/O-Dispersion bildet (siehe Verfahrensbeschreibung weiter unten) zugegeben worden sein. Sie können auch vorgängig dem Rahm selber beigemischt worden sein. Als solche sauren Agentien sind Buttermilch oder Buttermilchserum bevorzugt.

Bevorzugt ist gleichzeitige Anwesenheit von Sauerrahm und einem sauren Agens, und besonders bevorzugt ist die gleichzeitige Awesenheit von Sauerrahm und Buttermilch.

Die für die Fettphase der erfindungsgemässen W/O-Dispersion verwendbaren milchfremden Fette und/oder Öle sind nicht kritisch. Es können sowohl tierische wie auch pflanzliche Fette oder Mischungen davon sein. Sie können gewünschtenfalls gehärtet und/oder fraktioniert und/oder umgeestert sein. Beispiele für tierische milchfremde Fette sind Rindertalg, Schweineschmalz und Fischöl. Beispiele für pflanzliche milchfremde Fette sind Sojaöl, Rapsöl, Sonnenblumenöl, Palmöl, Palmkernöl, Erdnussöl, Baumwollsaatöl, Kokosfett, Olivenöl, Safloröl, Maiskeimöl, Traubenkernöl, Sesamöl, Kakaobutter und Schi-Stearin.

Die Milchfette sind die in Milchprodukten üblicherweise vorkommenden Fette, vorzugsweise sind es im wesentlichen Fette aus Rahm und Buttermilch.

Als milchfremde Fette sind, im Hinblick auf den ernährungsphysiologischen Wert, Fette und/oder Öle, die hohe Anteile ein- oder mehrfach ungesättigter Fettsäurereste in cis-Konfiguration aufweisen, bevorzugt. Beispiel für Fette mit einem merklichen Anteil einfach cis-ungesättigter Fettsäuren sind Olivenöl und Rindertalg. Beispiele für Fette mit einem hohen Anteil mehrfach cis-ungesättigter Fettsäuren sind Sojaöl, Safloröl und Fischöle.

Im Hinblick auf genügende Festigkeit der fertigen Dispersion bei Raumtemperatur kann es andererseits wünschenswert sein, wenn ein gewisser Anteil gesättigter und/oder gehärteter Fette in der Fettphase vorhanden ist. Beispiele für Fette mit hohen Anteilen gesättigter Fettsäuren sind, neben den eigentlichen Milchfetten, Palmöl und Schi-Stearin.

Das Gewichtsverhältnis milchfremde Fette zu Milchfette beträgt in der erfindungsgemässen W/O-Dispersion mindestesens 4:1, bei Margarinen kann es bevorzugt mindestens 10:1 betragen.

Es ist im allgemeinen bevorzugt, wenn die milchfremden Fette zu mindestens 25 Gewichtsprozenten Fette sind, die bei 25° flüssig vorliegen.

Die Fette, die nicht durch den Rahm beigesteuert werden, können bei der Herstellung einer erfindungsgemässen W/O-Dispersion vorzugsweise in Form eines Fettgemisches eingesetzt werden. Dieses Fettgemisch weist vorzugsweise einen so grossen Gewichtsanteil höherschmelzender Fette auf, dass trotz eines allfälligen Anteils flüssiger Öle das Fettgemisch bei 25°C fest ist.

Dem Fettgemisch können gewünschtenfalls aus der herkömmlichen Margarineherstellung bekannte natürliche, naturidentische oder synthetische fettlösliche Aromastoffe beigefügt werden. Solche Aromastoffe sind im Handel erhältlich. Ein Beispiel hierfür ist das von Grinsted, Dänemark, vertriebene Aromengemisch "Grinsted Flavouring 2590 Type Butter".

Ein bevorzugtes Fettgemisch ist eine Mischung aus Palmkernöl, Palmöl fraktioniert und Sonnenblumenöl. Besonders bevorzugt ist es, wenn in einer solchen Mischung der Anteil Palmkernöl 34,4 Gewichtsprozente, der Anteil Palmöl fraktioniert 22,4 Gewichtsprozente und der Anteil Sonnenblumenöl 43,2 Gewichtsprozente beträgt.

Dem Fachmann auf dem Gebiet der Margarineherstellung sind die Zusammnhänge zwischen Art und Menge der Fette und dem Verhalten der fertigen W/O-Dispersion bekannt, und aus dieser Kenntnis heraus ist er in der Lage, die Fettzusammensetzung gezielt zu variieren, um ein bestimmtes Verhalten zu erzielen.

Die Verhältnisse Fettphase : Wasserphase können in der erfindungsgemässen W/O-Dispersion von 95:5 bis 35:65 variiert werden, wobei als Fettphase die Kombination aus milchfremden Fetten und den Milchfetten aus dem Rahm zu verstehen ist, und mit Wasserphase die Kombination aus Rahm-Serum, weiterem Wasser und sonstigen wässerigen Lösungen gemeint ist. Vorzugsweise weist die erfindungsgemässe W/O-Dispersion einen Gesamtfettgehalt (d.h. der gewichtsmässige Anteil der Fettphase) von 75 bis 95 Gewichtsprozenten (Margarine) oder von 35 bis 45 Gewichtsprozenten (Halbfettmargarine) auf.

Die erfindungsgemässe Dispersion ist vorzugsweise frei von weiteren emulgierend wirkenden Substanzen, insbesondere frei von künstlichen Emulgatoren wie (in Klammern die entsprechenden E-Nummern aus der Schweizerischen Zusatzstoffverordnung) : Lecithin (E 322), Mono- und Diglyceride von Speisefettsäuren (E 471), mit Citronensäure veresterte Mono- und Diglyceride von Speisefettsäuren (E 472c), Mono- und Diacetylweinsäure (E 472e), mit Saccharose veresterte Speisefettsäuren (E 473), Natrium- (E 481), Kalium- oder Calciumstearyl-2-lactylat (E 482), Natriumlaurylsulfat (E 487).

Zur Farbgebung können in der erfindungsgemässen W/O-Dispersion gewünschtenfalls lebensmittelrechtlich zugelassene Farbstoffe und zur Konservierung lebensmittelrechtlich zugelassene Konservierungsmittel vorhanden sein. Beispiele für solche Zusätze sind (in Klammern die entsprechenden E-Nummern aus der Schweizerischen Zusatzstoffverordnung): Benzoesäure (E 210), Sorbinsäure (E 200) und beta-Carotin (E 160a). Es können gewünschtenfalls auch natürliche, naturidentische oder synthetische Aromastoffe vorhanden sein. Vorzugsweise werden neben den oben genannten fakultativen sauren Agentien keine weiteren Konservierungsstoffe, Farbstoffe oder Aromastoffe zugesetzt.

Die erfindungsgemässe W/O-Dispersion weist eine kontinuierliche Fettphase und eine darin emulgierte Wasserphase auf. Das Vorhandensein einer W/O-Dispersion kann überprüft werden, indem etwas von der Dispersion in ein Glas kaltes Wasser gegeben wird. Verteilt sich die Dispersion in dem kalten Wasser nicht, handelt es sich um eine W/O-Dispersion.

Gegenstand der Erfindung ist auch ein Verfahren zur Herstellung der erfindungsgemässen W/O-Dispersion, bei dem ein verflüssigtes Fettgemisch, enthaltend milchfremde Fette, vorgelegt, dann Rahm in einer Menge von 1 bis 20 Gewichtsprozenten bezogen auf die Dispersion, und dann Wasser hinzugemischt wird, und bis zur Erstarrung der Mischung gekühlt wird.

Dabei entsteht aus verflüssigtem Fettgemisch, Rahm, und Wasser zunächst eine Mischung in Form einer W/O-Emulsion.

Die Wasserphase der W/O-Emulsion wird dabei aus dem zugegebenen Wasser, dem Serum des Rahms und den allfälligen weiteren zugegebenen wässerigen Lösungen und Zusätzen erhalten; wurde z.B. noch Buttermilch oder ein anderes Milchprodukt zugegeben, beinhaltet die Wasserphase auch das Serum dieses Milchproduktes.

Die Fettphase der W/O-Emulsion wird aus dem ursprünglichen Fettgemisch und den Milchfetten des Rahms, sowie, falls ein weiteres Milchprodukt wie Buttermilch zugegeben wurde, aus dem Fettanteil dieses Milchproduktes erhalten.

Das als Ausgangsmaterial verwendete Fettgemisch wird vorgängig durch Erwärmen verflüssigt. Fette oder Fettgemische, die einen hohen Schmelzpunkt aufweisen, können vorgängig bis zum vollständigen Schmelzen über die Temperatur, bei der die Emulgierung durchgeführt wird, hinaus erhitzt werden und dann unter Bildung einer unterkühlten Schmelze auf die gewünschte Temperatur abgekühlt werden.

Die Temperatur, bei der das Fettgemisch und der Rahm gemischt werden, sowie die Temperatur, bei der das Wasser hinzugegeben wird, liegen vorzugsweise im Bereich zwischen 30 und 40°C. Der Rahm wird vorzugsweise bis unmittelbar vor der Verwendung gekühlt gelagert, um das Wachstum von Mikroorganismen zu unterdrücken, und weist beim Einsatz eine Temperatur von vorzugsweise etwa 10 bis etwa 25°C auf.

Das Zusammenmischen von Fettgemisch, Rahm und Wasser kann als Batch-Verfahren (diskontinuierlich) oder kontinuierlich und unter Verwendung von aus der Technik der Margarineherstellung üblichen Anlagen durchgeführt werden.

In einem Batch-Verfahren werden die einzelnen Komponenten (d.h. die Fettphase, der Rahm und die wässerige Phase) in der gewünschten Menge abgewogen und in einer Mischeinheit (Kirne) mit einem Rührwerk zugeführt. Das Einstellen der gewünschten Temperaturen kann in der Mischeinheit selber erfolgen, oder indem die einzelnen Komponenten vor dem Zusammenmischen in Lagerbehältern auf die gewünschte Temperatur thermostatisert werden, oder indem die Komponenten im Durchfluss über Wärmetauscher auf die gewünschte Temperatur gebracht werden.

Beim kontinuiertlich geführten erfindungsgemässen Verfahren können die Verhältnisse zwischen den einzelnen Komponenten mittels Durchflussmesser überwacht oder, genauer, mittels Dosierpumpen direkt eingestellt werden. Die eigentliche Mischung erfolgt mittels statischer Mischer und/oder Mischeinheiten mit Rührwerken. Die Einstellung der Temperatur kann analog wie bei der statischen Variante beschrieben durchgeführt werden.

Soll die W/O-Emulsion längere Zeit in flüssigem Zustand gehalten werden, geschieht dies vorzugsweise unter mechanischem Rühren oder Umwälzen. Die W/O-Emulsion kann zur Verbesserung der Haltbarkeit der fertigen W/O-Dispersion pasteurisiert werden.

Zum Erhalt der erfindungsgemässen W/O-Dispersion wird die W/O-Emulsion bis zur Erstarrung gekühlt. Vorzugsweise geschieht die Kühlung sehr schnell, z.B. unter Verwendung eines sogenannten Röhrenkühlers. Solche Röhrenkühler sind aus der herkömmlichen Margarineherstellung bekannt und im Handel z.B. unter den Markennamen "Votator" oder "Thermutator" (Cherry-Burrell, USA), "Perfector" (Gerstenberg und Agger, Dänemark) oder "Kombinator" (Schröder, Deutschland) erhältlich.

Der Übergang von der W/O-Emulsion zur erfindungsgemässen W/O-Dispersion durch Kühlen ändert die Zusammensetzung von Fettphase und Wasserphase nicht wesentlich, wenn die oben beschriebenen Röhrenkühler verwendet werden.

Die Erfindung wird durch die folgenden Beispiele weiter veranschaulicht.

In den Beispielen sind Prozente, sofern nicht anders angegeben, auf Gewichte bezogen.

Sofern bei einem Beispiel angegeben ist, dass "Sauerrahm" (ohne genauere Beschreibung) verwendet wurde, ist damit der Sauerrahm der Aargauer Zentralmolkerei, Suhr, Schweiz, gemeint, der die folgende Zusammensetzung aufweist (in Gewichtsprozenten) :

| | |
|---|---|
| Gehalt an Milchfett | ca. 35% |
| Wassergehalt max. | ca. 59% |
| Eiweisse | 2,2 ± 0,2% |
| Lactose | 3,2 ± 0,1% |
| Mineralstoffe | 0,5 ± 0,1% |
| Säuregrad im Serum | mind. 30° SH |
| Fremd-Mikroorganismen (neben den für die Reifung verwendeten Bakterien): | Enterobacteriaceen max. 10/g |
| | Hefen/Schimmel max. 10/g |

Die bakterielle Reifung war dabei nach einem in der Technik üblichen Verfahren zur Herstellung von Sauerrahm für Sauerrahmbutter durchgeführt worden.

### Beispiel 1

In einem Rührbehälter wurde eine Fettmischung, bestehend aus 344 kg Palmöl/Palmstearin, 115 kg Palmkernstearin und 306 kg Sonnenblumenöl bei 30 bis 40°C vorgelegt. Unter stetigem Rühren (34 U/min, Rührwerk von GAVET) wurden 100 kg Sauerrahm und eine wässerige Phase, bestehend aus 67,5 kg Wasser, 0,975 kg Kochsalz und 67,5 kg Buttermilch, zugegeben. Die erhaltene W/O-Emulsion wurde in einem Kombinator gekühlt. Die fertige W/O-Dispersion wies 80% Fettphase und 20% Wasserphase auf, wobei das Verhältnis zwischen milchfremden Fetten und Milchfett etwa 76,5 : 3,5 betrug.

### Beispiel 2

In einem Rührbehälter wurde eine Fettmischung, bestehend aus 148,5 kg Palmöl/Palmstearin, 33 kg Palmkernstearin und 148,5 kg Sonnenblumenöl bei 30 bis 40°C vorgelegt. Unter stetigem Rühren (34 U/min, Rührwerk von GAVET) wurden 200,0 kg Sauerrahm und eine wässerige Phase, bestehend aus 349 kg Wasser, 1 kg Kochsalz und 120 kg Buttermilch, zugegeben. Die erhaltene W/O-Emulsion wurde in einem Kombinator gekühlt. Die fertige W/O-Dispersion wies 40% Fettphase und 60% Wasserphase auf, wobei das Verhältnis zwischen milchfremden Fetten und Milchfett etwa 33 : 7 betrug.

### Beispiel 3

In einem Rührbehälter wurden 650 kg eines Fettgemisches mit derselben Zusammensetzung wie in Beispiel 1 beschrieben bei 40°C vorgelegt. Dann wurden 30 kg Sauerrahm und schliesslich 170 kg Wasser bei derselben Temperatur zugegeben und die Mischung für 1 Minute gerührt (34 U/min, Rührwerk von GAVET). Eine Probe der erhaltenen W/O-Emulsion schied beim ungerührten Stehenlassen bei 50°C nach 30 Minuten etwa 74% der Wasserphase ab. Dies entspricht annähernd dem Trennverhalten einer normalen W/O-Emulsion mit einem herkömmlichen Emulgatorsystem. Die erhaltene W/O-Emulsion wurde in einem Kombinator gekühlt. Die fertige W/O-Dispersion wies etwa 78% Fettphase und 22% Wasserphase auf, wobei das Verhältnis zwischen milchfremden Fetten und Milchfett etwa 98,4 : 1,6 betrug.

### Beispiel 4

In einem Rührbehälter wurden 650 kg eines Fettgemisch mit derselben Zusammensetzung wie in Beispiel 1 beschrieben bei 40°C vorgelegt. Dann wurden 80 kg Sauerrahm und schliesslich 120 kg Wasser bei derselben Temperatur zugegeben und die Mischung für 1 Minute gerührt (34 U/min, Rührwerk von GAVET). Eine Probe der erhaltenen intermediären W/O-Emulsion schied beim ungerührten Stehenlassen bei 50°C nach 25 Minuten etwa 93% der Wasserphase ab. Die erhaltene W/O-Emulsion wurde in einem Kombinator gekühlt. Die fertige W/O-Dispersion wies etwa 80% Fettphase und 20% Wasserphase auf, wobei das Verhältnis zwischen milchfremden Fetten und Milchfett etwa 96 : 4 betrug.

### Beispiel 5

Es wurde ein Fettgemisch, bestehend aus 211 kg Palmkernöl, 133 kg Palmöl fraktioniert, 4 kg rotem Palmöl und 264 kg Sonnenblumenöl, in einer Kirne bei 30°C vorgelegt. Dann wurden 80 kg Sauerrahm zugegeben und dann eine wässerige Phase, bestehend aus 53,2 kg Wasser, 0,78 kg Kochsalz, und 54 kg Buttermilch sauer, langsam und unter konstantem Rühren und derselben Temperatur zugegeben. Die erhaltene W/O-Emulsion wurde pasteurisiert und in einem Kombinator gekühlt. Die fertige W/O-Dispersion wies etwa 80% Fettphase und 20% Wasserphase auf, wobei das Verhältnis zwischen milchfremden Fetten und Milchfetten 96 : 4 betrug.

### Beispiel 6

Es wurde ein Fettgemisch (Menge und Zusammensetzung wie in Beispiel 5) in einer heizbaren Kirne auf 41°C erwärmt. Dann wurden innert einer Minute unter Rühren (34 U/min, Rührwerk von GAVET) 80 kg Sauerrahm mit einer Temperatur von 12°C zugegeben. Die Temperatur der Fett/Sauerrahmmischung stellte sich bei 35°C ein. Innert einer Minute wurden 54 kg Buttermilch sauer mit einer Temperatur von 13°C zugegeben, wodurch sich die Temperatur der Mischung auf 33°C einstellte. Über einen Zeitraum von etwa 20 Minuten wurde unter Rühren eine Lösung von 0,780 kg Kochsalz in 53 kg Wasser, mit einer Temperatur von 35°C, zugegeben. Die entstandene Emulsion wies eine Temperatur von etwa 36°C auf. Nach etwa 10 Minuten Rühren bei 220 U/min wurde die W/O-Emulsion in einem Kombinator abgekühlt. Die fertige W/O-Dispersion wies 80% Fettphase und 20% Wasserphase auf.

### Beispiel 7

In einem Rührbehälter wurde ein Fettgemisch, bestehend aus 868 g Palmkernöl, 549 g Palmöl fraktioniert, 12 g rotem Palmöl und 1232 g Sonnenblumenöl, bei 30 bis 40°C vorgelegt. Dann wurden langsam, unter konstantem Rühren und derselben Temperatur 350 g bakteriell gereifter Butterungsrahm (40 Gewichtsprozente Fett, pH-Wert 4,65; bezogen in Waldshut/Tiengen, Deutschland; hergestellt aus Breisgauer Milch) zugegeben und dann eine wässerige Phase, bestehend aus 250 g Wasser, 3,4 g Kochsalz und 236 g Buttermilch sauer, zugegeben. Die erhaltene W/O-Emulsion wurde pasteurisiert und in einem Klein-Kombinator gekühlt. Die fertige W/O-Dispersion wies etwa 80% Fettphase und 20% Wasserphase auf, wobei das Verhältnis zwischen milchfremden Fetten und Milchfetten 95 : 5 betrug.

### Beispiel 8

In einem Rührbehälter wurde ein Fettgemisch, bestehend aus 872 g Palmkernöl, 555 g Palmöl fraktioniert, 12 g rotem Palmöl und 1249 g Sonnenblumenöl, bei 30 bis 40°C vorgelegt. Dann wurden langsam, unter konstantem Rühren und derselben Temperatur 351 g Butterungsrahm (32 Gewichtsprozente Fett, pH-Wert 6,74; dient bei der Zentralmolkerei Suhr, Schweiz, als Ausgangsrahm bei der Herstellung ihres Sauerrahms) zugegeben und dann eine wässerige Phase, bestehend aus 250 g Wasser, 3,4 g Kochsalz und 236 g Buttermilch sauer, zugegeben. Die erhaltene W/O-Emulsion wurde pasteurisiert und in einem Klein-Kombinator gekühlt. Die fertige W/O-Dispersion wies etwa 80% Fettphase und 20% Wasserphase auf, wobei das Verhältnis zwischen milchfremden Fetten und Milchfetten 96 : 4 betrug.

### Beispiel 9

Es wurde gleich wie in Beispiel 8 vorgegangen, ausser dass der Butterungsrahm vorgängig (d.h. vor der Zugabe zur Fettmischung) mit 80%iger wässeriger Milchsäure auf pH 4,78 eingestellt wurde. Die fertige W/O-Dispersion wies etwa 80% Fettphase und 20% Wasserphase auf, wobei das Verhältnis zwischen milchfremden Fetten und Milchfetten 96 : 4 betrug.

## Patentansprüche

1. Essbare Wasser-in-Öl-Dispersion, umfassend milchfremde Fette, Rahm mit Milchfetten und eine in der Fettphase dispergierte Wasserphase, **dadurch gekennzeichnet, dass**
a) der Rahm in einer Menge zwischen 1 und 20 Gewichtsprozenten der Dispersion vorhanden ist,
b) die Wasserphase einschliesslich des Serums des Rahms 5 bis 65 Gewichtsprozente der Dispersion beträgt, und
c) milchfremde Fette und Milchfett in einem Gewichtsverhältnis von mindestens 4 : 1 vorhanden sind.

2. Dispersion nach Anspruch 1, **dadurch gekennzeichnet, dass** der pH der Wasserphase im Bereich von 4,0 bis 5,0 liegt.

3. Dispersion nach Anspruch 1 oder 2, **dadurch gekennzeichnet, dass** der Rahm ein Sauerrahm ist.

4. Dispersion nach Anspruch 3, **dadurch gekennzeichnet, dass** sie zusätzlich zum Sauerrahm ein saures Agens enthält.

5. Dispersion nach Anspruch 4, **dadurch gekennzeichnet, dass** das saure Agens Buttermilch ist.

6. Dispersion nach einem der Ansprüche 1 bis 5, **dadurch gekennzeichnet, dass** die Menge des Rahms 3 bis 15 Gewichtsprozente beträgt.

7. Dispersion nach einem der Ansprüche 1 bis 6, **dadurch gekennzeichnet, dass** die Summe aus milchfremden Fetten und Milchfetten 35 bis 45 Gewichtsprozente der Dispersion beträgt.

8. Dispersion nach einem der Ansprüche 1 bis 6, **dadurch gekennzeichnet, dass** die Summe aus milchfremden Fetten und Milchfetten 75 bis 95 Gewichtsprozente der Dispersion beträgt.

9. Dispersion nach einem der Ansprüche 1 bis 8, im wesentlichen frei von weiteren emulgierend wirkenden Substanzen.

10. Dispersion nach einem der Ansprüche 1 bis 9, im wesentlichen frei von zugegebenen Konservierungsmitteln und Farbstoffen.

11. Verfahren zur Herstellung der Dispersion nach Anspruch 1, **dadurch gekennzeichnet, dass** ein verflüssigtes Fettgemisch, enthaltend milchfremde Fette, vorgelegt, dann Rahm in einer Menge von 1 bis 20 Gewichtsprozenten bezogen auf die Dispersion, und dann Wasser hinzugemischt wird, und die Mischung bis zur Erstarrung gekühlt wird.

## Claims

1. Edible water-in-oil dispersion comprising non-milk fats, cream with milk fats and an aqueous phase dispersed in the fat phase, **characterized in that**
a) the cream is present in an amount of between 1 and 20 percent by weight of the dispersion,
b) the water phase including the serum of the cream is 5 to 65 percent by weight of the dispersion, and
c) non-milk fats and milk fat are present in a weight ratio of at least 4 : 1.

2. Dispersion according to claim 1, **characterized in that** the pH of the aqueous phase is in the range of 4.0 to 5.0.

3. Dispersion according to claim 1 or 2, **characterized in that** the cream is a sour cream.

4. Dispersion according to claim 3, **characterized in that** it comprises, further to the sour cream, an acidic agent.

5. Dispersion according to claim 4, **characterized in that** the acidic agent is buttermilk.

6. Dispersion according to one of claims 1 to 5, **characterized in that** the amount of the cream is 3 to 15 percent by weight.

7. Dispersion according to one of claims 1 to 6, **characterized in that** the sum of non-milk fats and milk fats is 35 to 45 percent by weight of the dispersion.

8. Dispersion according to one of claims 1 to 6, **characterized in that** the sum of non-milk fats and milk fats is 75 to 95 percent by weight of the dispersion.

9. Dispersion according to one of claims 1 to 8, being essentially free of further compounds acting as emulgators.

10. Dispersion according to one of claims 1 to 9, being essentially free of added preservatives and colorants.

11. Process for the preparation of the dispersion according to claim 1, **characterized by** providing a liquefied fat mixture comprising non-milk fats, then mixing thereto cream in an amount of 1 to 20 percent by weight based on the dispersion, and then water, and cooling the mixture to solidification.

## Revendications

1. Dispersion comestible d'eau dans l'huile, comprenant des matières grasses non lactées, de la crème avec des matières grasses lactées et une phase aqueuse dispersée dans la phase grasse, **caractérisée en ce que**
a) la crème est présente en une quantité de 1 à 20 % en poids de la dispersion,
b) la phase aqueuse y compris le sérum de la crème constitue de 5 à 65 % en poids de la dispersion, et
c) les matières grasses non lactées et la graisse de lait sont présentes en un rapport pondéral d'au moins 4 à 1.

2. Dispersion selon la revendication 1, **caractérisée en ce que** le pH de la phase aqueuse se situe dans la plage de 4,0 à 5,0.

3. Dispersion selon la revendication 1 ou 2, **caractérisée en ce que** la crème est une crème aigre.

4. Dispersion selon la revendication 3, **caractérisée en ce qu'**elle contient un agent acide en plus de la crème aigre.

5. Dispersion selon la revendication 4, **caractérisée en ce que** l'agent acide est du babeurre.

6. Dispersion selon l'une quelconque des revendications 1 à 5, **caractérisée en ce que** la quantité de crème constitue de 3 à 15 % en poids.

7. Dispersion selon l'une quelconque des revendications 1 à 6, **caractérisée en ce que** le total des matières grasses non lactées et des matières grasses lactées constitue de 35 à 45 % en poids de la dispersion.

8. Dispersion selon l'une quelconque des revendications 1 à 6, **caractérisée en ce que** le total des matières grasses non lactées et des matières grasses lactées constitue de 75 à 95 % en poids de la dispersion.

9. Dispersion selon l'une quelconque des revendications 1 à 8, sensiblement exempte d'autres substances à effet émulsifiant.

10. Dispersion selon l'une quelconque des revendications 1 à 9, sensiblement exempte d'agents de conservation et de colorants ajoutés.

11. Procédé de préparation de la dispersion selon la revendication 1, **caractérisé en ce que** l'on dispose un mélange de matières grasses liquéfié contenant des matières grasses non lactées, puis on ajoute de la crème en une quantité de 1 à 20 % en poids par rapport à la dispersion, on ajoute ensuite de l'eau et l'on refroidit le mélange jusqu'à solidification.
